# EUROPEAN PATENT SPECIFICATION

(11) **EP 4 206 360 B1**
(45) Date of publication and mention of the grant of the patent: **19.03.2025**
(21) Application number: 21383229.8
(22) Date of filing: 29.12.2021
(51) Int. Cl.: C25B 1/04, C25B 9/67, C07C 13/18, F03D 9/19

(54) **SYSTEM FOR MANAGING HYDROGEN PRODUCTION AND STORAGE, AND METHOD OF OBTAINING AND STORING HYDROGEN BY OPERATING SUCH SYSTEM**
SYSTEM ZUR VERWALTUNG VON WASSERSTOFFPRODUKTION UND -LAGERUNG, UND VERFAHREN ZUR GEWINNUNG UND SPEICHERUNG VON WASSERSTOFF DURCH BETRIEB EINES SOLCHEN SYSTEMS
SYSTÈME DE GESTION DE PRODUCTION ET DE STOCKAGE D'HYDROGÈNE, ET PROCÉDÉ D'OBTENTION ET DE STOCKAGE D'HYDROGÈNE PAR EXPLOITATION D'UN TEL SYSTÈME

(43) Date of publication of application: 05.07.2023
(73) Proprietor: BJ Atlanthy S.L., 36208 Vigo (Pontevedra) (ES)
(72) Inventor: ARMIÑO FRANCO, Brais, 36208 Vigo (Pontevedra) (ES); POLLOS EZQUERRA, Javier, 36208 Vigo (Pontevedra) (ES)
(74) Representative: TRBL Intellectual Property

(56) References cited:
- EP-A1- 2 905 359
- WO-A1-2013/031502
- CN-A- 110 098 425
- US-B2- 10 208 665

## Description

### TECHNICAL FIELD

This invention belongs to the field of method and devices for using hydrogen as an energy vector, in particular to a system for managing hydrogen production and storage and a method of obtaining and storing hydrogen by operating such system, see claims 1 and 6 respectively.

### STATE OF THE ART

Hydrogen has revealed as one of the most important and most promising energy vectors to face important climate challenges. Renewable energy sources (like solar and wind energy) are very important in this scenario and will complement each other, every one of them having their own advantages and drawbacks. Renewable energy is fundamental in our future energy systems. Its penetration into the different end-uses must be complete. This renewable energy penetration will happen mainly through electrification of the end uses. However, there is a large number of applications (approximately 15 % of the final energy consumption) that cannot be electrified. Here is where hydrogen will come up as an energy vector that allows to use renewable energy in these so-called hard-to-abate sectors.

Hydrogen is well-known and it has been used for decades, however, most of this use has been focused in industrial applications where hydrogen is produced close to the demand. For the new energy outlook, hydrogen production will be more decentralized, closer to the renewable energy resource rather than to the consumer, and its storage and transportation will be key in order to provide security in the service and affordable costs to the final user. However, there is still much to improve concerning the storage and transport of this element, due to its high permeability, flammability and low density, hydrogen is very difficult to store and handle. Therefore, different methods to store and transport hydrogen are under consideration.

Currently, high-pressure storage in tanks is the most common solution for the storage of small quantities of this element. Typically, hydrogen is compressed to pressures between 200 and 1000 bar in order to be stored and transported through tube trailers, implying high costs in materials and compressors, as for high energy consumption due to the high work required in order to increase the density of this gas.

Other option is to liquify this hydrogen, cooling it down to -253 °C, what implies a high energy expenditure which currently tops as much as 12 kWh/kg of hydrogen, what equals approximately30% of the total energy contained in the hydrogen. Then, this hydrogen could be shipped in newly built vessels that are currently under construction or by trucks, which are in operation currently.

Compressed hydrogen could be also sent through pipelines for the cases where large amounts of this gas are transported. Nevertheless, these pipelines must be connected both to the consumption and production sites, which is only applicable to centralized systems for large industrial consumers.

CN 110 098 425 A, according to its abstract, describes an offshore wind power based hydrogen production and organic liquid hydrogen storage energy-storing system, and corresponding method. The output end of an offshore wind power generator is connected with the input end of a power divider, two output ends of the power divider are connected with the input end of an AC/DC rectifier and the micro grid respectively, the output end of the AC/DC rectifier is connected with a power interface of a seawater electrolyzing hydrogen production device, a hydrogen outlet of the seawater electrolyzing hydrogen production device is communicated with an inlet of a liquid hydrogenation device, an outlet of the liquid state hydrogenation device is communicated with an inlet of a liquid hydrogen storage tank, an outlet of the liquid hydrogen storage tank is communicated with an inlet of a liquid dehydrogenation device, a hydrogen outlet of the liquid dehydrogenation device is communicated with a hydrogen inlet of a fuel cell power generator, and the output end of the fuel cell power generator is elected with the micro grid via a AC/AC inverter.

Liquefying and compressing hydrogen are the current methods used to transport hydrogen. However, these do not solve issues related to the flammability, low density or permeability through materials. In order to solve this, and thinking about the future energy systems, where storage and long-distance shipping will be needed, other methods of transporting and storing hydrogen are needed.

### DESCRIPTION OF THE INVENTION

The invention provides an alternative and integrated solution for the production and storage of hydrogen by means of a system for managing hydrogen production and storage according to claim 1, the system comprising
an electrolyzer configured to receive a heat input, a water input and a power input and configured to produce hydrogen
a first tank configured to house a liquid carrier suitable for being hydrogenated
a hydrogenation system with a first input intended to receive the hydrogen produced by the electrolyzer and a second input intended to receive the liquid carrier from the first tank and configured to hydrogenate the liquid carrier in order to produce a hydrogenated liquid carrier, producing waste heat
heat transfer means configured to transfer the waste heat produced by the hydrogenation system to the heat input of the electrolyzer
a second tank configured to receive the hydrogenated liquid carrier produced by the hydrogenation system, and
a structure comprising means to house and/or provide support to the elements of the system in an offshore environment.

This system is advantageously able to generate and store hydrogen efficiently in a safe and simple arrangement. The hydrogenation element produces heat as a consequence of the hydrogenation process. This heat is used by the electrolyzer to improve the performance of the electrolysis process, so there is a high synergy between these two elements, thus allowing for 40 to 50 % higher amount of hydrogen production with the same amount of energy if compared to electrolyzers which do not use waste heat.

Furthermore, the use of an offshore structure to house and support the elements of the system allows for the synergy with other energy sources and the sea water, which is advantageous for the operation of the system.

According to the present invention, the electrolyzer is a Solid Oxide Electrolyzer, known as SOEL. These SOEL electrolyzers work at high temperatures and can use waste heat (water entering into the system at 150-200°C) in order to achieve efficiencies as high as 90 %. These systems are especially interesting to create hydrogen from water and electricity.

Further according to the present invention, the system further comprises a wind turbine configured to provide electric supply for the power input of the electrolyzer.

With this energy supply, the electrolyzer may operate and produce the hydrogen using an energy source which is integrated in the system.

In some particular embodiments, the heat transfer means comprise a heat exchanger system and a pipe, and the heat input and the water input of the electrolyzer are the same, wherein
the heat exchanger system is arranged to receive heat from the hydrogenation system
the pipe is arranged to receive the heat from the heat exchanger to heat the fluid inside the pipe, wherein the pipe is configured to carry heated water to the water input of the electrolyzer.

In this embodiment, water and heat are received by the electrolyzer in the same input, which merges the water input and the heat input. With this configuration, water, which is necessary to produce hydrogen, is received. In the same act, heat, which is advantageous to improve the efficiency of the electrolyzer, is received in the shape of hot water. This heat is produced by the hydrogenation system in the hydrogenation step, and is transferred to the water within the pipes, to be fed to the electrolyzer.

According to the present invention, the offshore structure is a floating offshore structure comprising
a tower sub-structure configured to provide a support for the wind turbine
an electrolyzer sub-structure configured to provide a support for the electrolyzer
a hydrogenation sub-structure configured to provide a support for the hydrogenation system
a tanks sub-structure configured to house at least a portion of the first tank and/or the second tank.

This first floating structure is advantageous since it provides several advantages to the operation of the system. Offshore arrangements are interesting for wind turbines, and the floating structure has room to store the different tanks, which may be submerged to save space. Further, the water needed for the electrolyzer may be taken from the sea.

And further according to the present invention, the tanks sub-structure comprises an inlet valve to fill the first tank with new organic liquid and an outlet valve to extract hydrogenated liquid organic hydrogen carrier from the second tank to an external off-taker.

This allows current vessels to supply dehydrogenated liquid carrier from land and load the hydrogenated liquid carrier to be safely transported to land.

In some particular embodiments, the system further comprises a buffer tank arranged between the electrolyzer and the hydrogenation element, configured to store the hydrogen before being used by the hydrogenation element. When the production of hydrogen is not synchronized with the hydrogenation process, a buffer tank may store the produced hydrogen before being used. This is also useful in the transient processes when turning on and off the hydrogenation system.

In some particular embodiments, the system further comprises a compressor arranged between the electrolyzer and the hydrogenation element, the compressor being configured to increase the pressure of the hydrogen at the output of the electrolyzer.

This compressor ensures a high pressure at the input of the hydrogenation system. In addition, it allows a higher storage of hydrogen in the buffer tank for the same volume, what can be useful for the hydrogenation system in order to ramp-up or down its production with a less pronounced pace, guaranteeing that the system does not suffer damage over time and a safe process, since these units work at temperatures in the range of 150 - 250 °C. In some particular embodiments, the system further comprises a water treatment unit arranged before the electrolyzer, the water treatment unit being configured to treat the water to be received by the electrolyzer, so that the water that enters the electrolyzer is purified and deionized water.

In a further inventive aspect, the invention provides a method of obtaining and storing hydrogen by operating such system as defined in claim 6, the method comprising the steps of
providing water and power supply to the electrolyzer to produce hydrogen
providing a liquid suitable for being hydrogenated and the hydrogen produced by the electrolyzer to a hydrogenation system to hydrogenate the liquid in order to produce a hydrogenated liquid carrier and to produce waste heat
transfer the heat produced by the hydrogenation system to the heat input to the electrolyzer
store the hydrogenated liquid hydrogen carrier in a second tank.

In some particular embodiments, the water is provided from the sea.

According to the present invention, power supply is obtained from the wind turbine and sent to the electrolyzer.

In some particular embodiments, the liquid carrier is an aromatic hydrocarbon, such as toluene or benzene.

These compounds are especially suitable since they have a similar density after and before hydrogenation, so the floatability of the floating structure does not vary sensitively.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

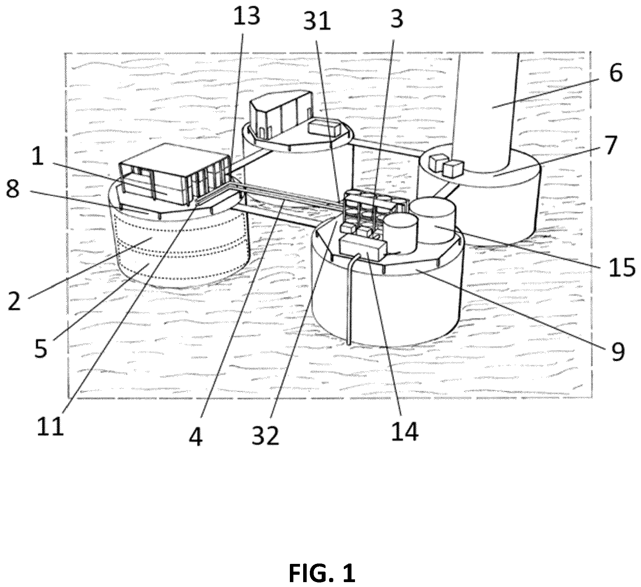

Figure 1 shows a scheme of an assembly according to the invention.

In this figure, the following reference numbers are used
- 1: SOEL
- 2: First tank
- 3: Hydrogenation system
- 31: First input of the hydrogenation system
- 32: Second input of the hydrogenation system
- 4: Heated water pipes
- 5: Second tank
- 6: Wind turbine
- 7: Tower sub-structure
- 8: Electrolyzer and tanks sub-structure
- 9: Hydrogenation sub-structure
- 11: Heated water input
- 13: Power input
- 14: Water treatment station
- 15: Buffer tank

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Figure 1 shows a scheme of a system for managing hydrogen production and storage according to the invention.

This system comprises a floating offshore structure with different floating sub-structures. A tower sub-structure 7 provides a mechanical and floating support for a wind turbine 6, the electrolyzer sub-structure 8 provides support to an electrolyzer 1 and also provides support and space for the tanks 2, 5. There is an additional floating sub-structure 9 which provides support for the hydrogenation system.

This electrolyzer 1 is a SOEL and has a heated water input 11 and a power input 13. This SOEL 1 is configured to produce hydrogen from the water received, by using the electricity coming from the wind turbine. Further, since the water is heated water, heat of the water is used to improve the efficiency of the SOEL. The operation of a SOEL is known by a skilled person, so there is no need for further clarifications.

The hydrogenation system 3 comprises a first input 31 intended to receive the hydrogen produced by the electrolyzer 1 and a second input 32. This second input 32 is connected to a first tank 2, which contains toluene. Toluene is fed to the second input 32 of the hydrogenation system 3 and this toluene is hydrogenated and transformed in methyl-cyclohexane. In this process, heat is produced, and transferred by a heat exchanger to the purified water which is extracted from the sea and treated at the water treatment element 14. Next, the methyl-cyclohexane is stored in a second tank 5.

The heat pipes 4 carry water, which is heated when in contact with the hydrogenation generation unit. This water, at a temperature of around 200°C, is carried by the piping system 4 to the heated water input 11 of the SOEL 1.

The hydrogenation unit comprises a buffer tank 15 to store the hydrogen before being used by the hydrogenation element. This is useful to synchronize the hydrogen production (in charge of the SOEL) and the hydrogenation process (in charge of the hydrogenation unit). Since these two processes do not necessarily have the same rate, it is useful to use this buffer tank 15. A compressor is used to ensure a proper pressure in this buffer tank and to provide a suitable inlet pressure for the hydrogenation system.

The first tank 2 and the second tank 5 are contained within the electrolyzer sub-structure 8. Since the sum of the toluene and methyl-cyclohexane volumes is approximately constant (toluene is extracted from the first tank and converted into methyl-cyclohexane in the hydrogenation process, and then stored in the second tank), the sum of the space needed by the first tank and the space needed by the second tank is also approximately constant. Hence, these two tanks may be incorporated in the same tank structure, separated by a moving membrane.

Further, each tank comprises a valve: the first tank comprises an inlet valve to fill the first tank with new dehydrogenated organic liquid and the second tank comprises an outlet valve to extract hydrogenated liquid organic hydrogen carrier from the second tank to an external off-taker.

## Claims

1. System for managing hydrogen production and storage, the system comprising
a Solid Oxide Electrolyzer (1) configured to receive a heat input (11), a water input (11) and a power input (13) and configured to produce hydrogen,
a wind turbine (6) configured to provide electric supply for the power input of the Solid Oxide electrolyzer;
a first tank (2) configured to house a liquid carrier suitable for being hydrogenated,
a hydrogenation system (3) with a first input (31) intended to receive the hydrogen produced by the Solid Oxide Electrolyzer (1) and a second input (32) intended to receive the liquid carrier from the first tank (2) and configured to hydrogenate the liquid carrier in order to produce a hydrogenated liquid carrier, producing waste heat,
heat transfer means (4) configured to transfer the waste heat produced by the hydrogenation system to the heat input (11) of the Solid Oxide Electrolyzer (1),
a second tank (5) configured to receive the hydrogenated liquid carrier produced by the hydrogenation system (3), and
a floating offshore structure (7, 8, 9) comprising means to house and/or provide support to the elements (1, 2, 3, 4, 5, 6) of the system in an offshore environment, wherein the offshore structure comprises
a tower sub-structure (7) configured to provide a support for a wind turbine (6);
an electrolyzer sub-structure (8) configured to provide a support for the electrolyzer (1);
a hydrogenation sub-structure (9) configured to provide a support for the hydrogenation system (3); and
a tanks sub-structure (8) configured to house at least a portion of the first tank (2) and/or the second tank (5), wherein the tanks sub-structure (8) comprises an inlet valve to fill the first tank (2) with new organic liquid and an outlet valve to extract hydrogenated liquid organic hydrogen carrier from the second tank (5) to an external off-taker, such that current vessels can supply dehydrogenated liquid carrier from land and can load the hydrogenated liquid carrier to be safely transported to land.

2. System according to claim 1, wherein
the heat transfer means comprise a heat exchanger system and a pipe, and the heat input and the water input of the electrolyzer are the same,
the heat exchanger system is arranged to receive heat from the hydrogenation system, and
the pipe (4) is arranged to receive the heat from the heat exchanger to heat the fluid inside the pipe, wherein the pipe is configured to carry heated water to the water input of the electrolyzer.

3. System according to any of the preceding claims, further comprising a buffer tank (15) arranged between the electrolyzer and the hydrogenation element, configured to store the hydrogen before being used by the hydrogenation element.

4. System according to any of the preceding claims, further comprising a compressor arranged between the electrolyzer and the hydrogenation element, the compressor being configured to increase the pressure of the hydrogen at the output of the electrolyzer.

5. System according to any of the preceding claims, further comprising a water treatment unit (14) arranged before the electrolyzer, the water treatment unit being configured to treat the water to be received by the electrolyzer, so that the water that enters the electrolyzer is purified and deionized water.

6. Method for operating a system according to any of the preceding claims to obtain and store hydrogen, comprising the steps of
providing water and power supply to the electrolyzer (1) to produce hydrogen, wherein power supply is obtained in the wind turbine (6) and sent to the electrolyzer (1),
providing a liquid suitable for being hydrogenated and the hydrogen produced by the electrolyzer to a hydrogenation system (3) to hydrogenate the liquid in order to produce a hydrogenated liquid carrier and to produce waste heat,
transfer the heat produced by the hydrogenation system to the heat input to the electrolyzer (1), and
store the hydrogenated liquid hydrogen carrier in a second tank (5).

7. Method according to claim 6, wherein the water is provided from the sea.

8. Method according to any of claims 6 to 7, wherein the liquid carrier is an aromatic hydrocarbon, such as toluene or benzene.

## Patentansprüche

1. System zur Verwaltung der Wasserstoffproduktion und -speicherung, wobei das System umfasst
einen Festoxidelektrolyseur (1), der dazu konfiguriert ist, einen Wärmeeingang (11), einen Wassereingang (11) und einen Stromeingang (13) zu empfangen, und dazu konfiguriert ist, Wasserstoff zu erzeugen,
eine Windturbine (6), die dazu konfiguriert ist, eine elektrische Versorgung für den Stromeingang des Festoxidelektrolyseurs bereitzustellen;
einen ersten Tank (2), der dazu konfiguriert ist, einen flüssigen Träger aufzunehmen, der zur Hydrierung geeignet ist,
ein Hydrierungssystem (3) mit einem ersten Eingang (31), der dazu bestimmt ist, den vom Festoxidelektrolyseur (1) erzeugten Wasserstoff zu empfangen, und einem zweiten Eingang (32), der dazu bestimmt ist, den flüssigen Träger aus dem ersten Tank (2) zu empfangen, und das dazu konfiguriert ist, den flüssigen Träger zu hydrieren, um einen hydrierten flüssigen Träger zu produzieren, wobei Abwärme produziert wird,
Wärmeübertragungsmittel (4), die dazu konfiguriert sind, die vom Hydrierungssystem produzierte Abwärme an den Wärmeeingang (11) des Festoxidelektrolyseurs (1) zu übertragen,
einen zweiten Tank (5), der dazu konfiguriert ist, den von dem Hydrierungssystem (3) produzierten hydrierten flüssigen Träger zu empfangen, und eine schwimmende Offshore-Struktur (7, 8, 9), die Mittel zur Unterbringung und/oder zur Bereitstellung einer Stütze der Elemente (1, 2, 3, 4, 5, 6) des Systems in einer Offshore-Umgebung umfasst, wobei die Offshore-Struktur umfasst
eine Turmunterstruktur (7), die dazu konfiguriert ist, eine Stütze für eine Windturbine (6) bereitzustellen;
eine Elektrolyseur-Unterstruktur (8), die dazu konfiguriert ist, eine Stütze für den Elektrolyseur (1) bereitzustellen;
eine Hydrierungsunterstruktur (9), die dazu konfiguriert ist, eine Stütze für das Hydrierungssystem (3) bereitzustellen; und
eine Tankunterstruktur (8), die dazu konfiguriert ist, zumindest einen Abschnitt des ersten Tanks (2) und/oder des zweiten Tanks (5) aufzunehmen, wobei die Tankunterstruktur (8) ein Einlassventil zum Füllen des ersten Tanks (2) mit neuer organischer Flüssigkeit und ein Auslassventil zum Absaugen von hydriertem flüssigem organischen Wasserstoffträger aus dem zweiten Tank (5) zu einem externen Abnehmer umfasst, so dass vorhandene Schiffe dehydrierten flüssigen Träger vom Land aus anliefern und den hydrierten flüssigen Träger laden können, um ihn sicher an Land zu transportieren.

2. System nach Anspruch 1, wobei die Wärmeübertragungsmittel ein Wärmetauschersystem und ein Rohr umfassen und der Wärmeeingang und der Wassereingang des Elektrolyseurs die gleichen sind,
das Wärmetauschersystem dazu eingerichtet ist, Wärme aus dem Hydrierungssystem zu empfangen, und
das Rohr (4) dazu eingerichtet ist, die Wärme vom Wärmetauscher aufzunehmen, um das Fluid im Inneren des Rohrs zu erwärmen, wobei das Rohr dazu konfiguriert ist, erwärmtes Wasser zum Wassereingang des Elektrolyseurs zu leiten.

3. System nach einem der vorhergehenden Ansprüche, das ferner einen zwischen dem Elektrolyseur und dem Hydrierungselement angeordneten Puffertank (15) umfasst, der dazu konfiguriert ist, den Wasserstoff vor dessen Verwendung durch das Hydrierungselement zu speichern.

4. System nach einem der vorhergehenden Ansprüche, das ferner einen zwischen dem Elektrolyseur und dem Hydrierungselement angeordneten Kompressor umfasst, wobei der Kompressor dazu konfiguriert ist, den Druck des Wasserstoffs am Ausgang des Elektrolyseurs zu erhöhen.

5. System nach einem der vorhergehenden Ansprüche, das ferner eine vor dem Elektrolyseur angeordnete Wasseraufbereitungseinheit (14) umfasst, wobei die Wasseraufbereitungseinheit dazu konfiguriert ist, das vom Elektrolyseur empfangene Wasser aufzubereiten, so dass das in den Elektrolyseur eintretende Wasser gereinigtes und deionisiertes Wasser ist.

6. Verfahren zum Betreiben eines Systems nach einem der vorhergehenden Ansprüche zur Gewinnung und Speicherung von Wasserstoff, umfassend die Schritte:
Bereitstellen einer Wasser- und Stromversorgung für den Elektrolyseur (1) zur Produktion von Wasserstoff, wobei die Stromversorgung in der Windturbine (6) erhalten wird und an den Elektrolyseur (1) geleitet wird,
Bereitstellen eines zur Hydrierung geeigneten Fluids und des vom Elektrolyseur produzierten Wasserstoffs für ein Hydrierungssystem (3), um die Flüssigkeit zu hydrieren, um einen hydrierten flüssigen Träger zu produzieren und Abwärme zu produzieren,
Übertragen der vom Hydrierungssystem produzierten Wärme an den Wärmeeingang zu dem Elektrolyseur (1), und
Speichern der hydrierten flüssigen Wasserstoffträger in einem zweiten Tank (5).

7. Verfahren nach Anspruch 6, wobei das Wasser aus dem Meer bereitgestellt wird.

8. Verfahren nach einem der Ansprüche 6 bis 7, wobei der flüssige Träger ein aromatischer Kohlenwasserstoff wie Toluol oder Benzol ist.

## Revendications

1. Système de gestion de production et de stockage d'hydrogène, le système comprenant
un électrolyseur à oxyde solide (1) conçu pour recevoir une entrée de chaleur (11), une entrée d'eau (11) et une entrée d'énergie (13) et conçu pour produire de l'hydrogène,
une éolienne (6) conçue pour fournir une alimentation électrique pour l'entrée d'énergie de l'électrolyseur à oxyde solide ;
un premier réservoir (2) conçu pour loger un vecteur liquide apte à être hydrogéné,
un système d'hydrogénation (3) doté d'une première entrée (31) destinée à recevoir l'hydrogène produit par l'électrolyseur à oxyde solide (1) et d'une seconde entrée (32) destinée à recevoir le vecteur liquide provenant du premier réservoir (2) et conçu pour hydrogéner le vecteur liquide afin de produire un vecteur liquide hydrogéné, produisant de la chaleur perdue,
des moyens de transfert de chaleur (4) conçus pour transférer la chaleur perdue produite par le système d'hydrogénation à l'entrée de chaleur (11) de l'électrolyseur à oxyde solide (1),
un second réservoir (5) conçu pour recevoir le vecteur liquide hydrogéné produit par le système d'hydrogénation (3), et
une structure offshore flottante (7, 8, 9) comprenant des moyens pour loger et/ou fournir un support aux éléments (1, 2, 3, 4, 5, 6) du système dans un environnement offshore, dans lequel la structure offshore comprend
une sous-structure de tour (7) conçue pour fournir un support à une éolienne (6) ;
une sous-structure d'électrolyseur (8) conçue pour fournir un support à l'électrolyseur (1) ;
une sous-structure d'hydrogénation (9) conçue pour fournir un support au système d'hydrogénation (3) ; et
une sous-structure de réservoirs (8) conçue pour loger au moins une portion du premier réservoir (2) et/ou du second réservoir (5), dans lequel la sous-structure de réservoirs (8) comprend une vanne d'entrée pour remplir le premier réservoir (2) avec un nouveau liquide organique et une vanne de sortie pour extraire un vecteur d'hydrogène organique liquide hydrogéné du second réservoir (5) vers un préleveur externe, de sorte que les cuves actuelles puissent fournir un vecteur liquide déshydrogéné depuis la terre et puissent charger le vecteur liquide hydrogéné pour un transport en toute sécurité jusqu'à la terre.

2. Système selon la revendication 1, dans lequel
les moyens de transfert de chaleur comprennent un système d'échangeur de chaleur et un tuyau, et l'entrée de chaleur et l'entrée d'eau de l'électrolyseur sont identiques,
le système d'échangeur de chaleur est agencé pour recevoir de la chaleur depuis le système d'hydrogénation, et
le tuyau (4) est agencé pour recevoir de la chaleur provenant de l'échangeur de chaleur pour chauffer le fluide à l'intérieur du tuyau, dans lequel le tuyau est conçu pour transporter de l'eau chauffée vers l'entrée d'eau de l'électrolyseur.

3. Système selon l'une quelconque des revendications précédentes, comprenant en outre un réservoir tampon (15) agencé entre l'électrolyseur et l'élément d'hydrogénation, conçu pour stocker l'hydrogène avant d'être utilisé par l'élément d'hydrogénation.

4. Système selon l'une quelconque des revendications précédentes, comprenant en outre un compresseur agencé entre l'électrolyseur et l'élément d'hydrogénation, le compresseur étant conçu pour augmenter la pression de l'hydrogène à la sortie de l'électrolyseur.

5. Système selon l'une quelconque des revendications précédentes, comprenant en outre une unité de traitement de l'eau (14) agencée avant l'électrolyseur, l'unité de traitement de l'eau étant conçue pour traiter l'eau devant être reçue par l'électrolyseur, de sorte que l'eau qui entre dans l'électrolyseur soit de l'eau purifiée et déionisée.

6. Procédé de fonctionnement d'un système selon l'une quelconque des revendications précédentes pour obtenir et stocker de l'hydrogène, comprenant les étapes de :
fourniture d'eau et d'électricité à l'électrolyseur (1) pour produire de l'hydrogène, dans lequel l'alimentation électrique est obtenue dans l'éolienne (6) et envoyée à l'électrolyseur (1),
fourniture d'un liquide apte à être hydrogéné et d'hydrogène produit par l'électrolyseur à un système d'hydrogénation (3) pour hydrogéner le liquide afin de produire un vecteur liquide hydrogéné et de produire de la chaleur perdue,
transfert de la chaleur produite par le système d'hydrogénation à l'entrée de chaleur vers l'électrolyseur (1), et
stockage du vecteur d'hydrogène liquide hydrogéné dans un second réservoir (5).

7. Procédé selon la revendication 6, dans lequel l'eau provient de la mer.

8. Procédé selon l'une quelconque des revendications 6 à 7, dans lequel le vecteur liquide est un hydrocarbure aromatique, tel que le toluène ou le benzène.
